# EUROPEAN PATENT APPLICATION

(11) **EP 3 179 622 A1**
(43) Date of publication of application: **14.06.2017**
(21) Application number: 15198430.9
(22) Date of filing: 08.12.2015
(51) Int. Cl.: H02M 3/338, H02M 1/32

(54) **RESONANT POWER CONVERTER**

(71) Applicant: ABB Technology AG, 8050 Zürich (CH)
(72) Inventor: Canales, Francisco, 5405 Baden-Dättwil (CH); Ortiz, Gabriel, 8005 Zürich (CH); Bishnoi, Hemant, 5430 Wettingen (CH); Alvarez, Silverio, 5405 Baden-Dättwil (CH)
(74) Representative: ABB Patent Attorneys

(57) **Abstract**

The present invention is concerned with resonant power converter operation during a transient overcurrent condition. According to the invention, the resonant power converter is provided with a damping resistor (61) to be connected in parallel to a capacitor (31) of a resonant circuit (30) of the resonant power converter (1) in case of a contingency condition. The damping resistor (61) results in a damping of the resonant circuit and in a reduction of peak and turn-off currents in the power semiconductor switches (S1, S2) of the resonant power converter at loads exceeding a rated load of the resonant power converter and occurring in case of a contingency condition, specifically during a transient overcurrent condition. The resonant power converter (1) therefore may continue operating under contingency conditions. Tripping or otherwise proactively inactivating the resonant power converter may be avoided or at least delayed until normal converter operation is resumed as a result of a contingency condition root cause elimination, specifically as a result of an automatic fault clearance by some converter-external load protections means.

## Description

### FIELD OF THE INVENTION

The invention relates to the field of resonant power converters, specifically to an operation of resonant power converters under overcurrent conditions.

### BACKGROUND OF THE INVENTION

Resonant power converters can reach a high efficiency level in voltage adaption and have been adopted for application in several areas. Without dedicated protection, a resonant power converter remains vulnerable against unexpected external faults, which can occur, in particular, in a load on a secondary side of the converter and which can translate to large currents on the primary side of the converter. Consequently, a reliable protection of the sensitive components of a resonant power converter, in particular against a temporary or transient overcurrent or overload event is required. In the art, mainly two protection mechanisms are used: on the one hand diode clamping of a resonant capacitor in the resonant power converter, and on the other hand frequency modulation of the switching frequency of the resonant power converter in case of an overload condition. These methods are particularly suited for higher resonant inductance in the power resonant converter. In addition to the above methods, it might be valuable to look for alternative protection methods.

The patent US 6087782 discloses a resonant mode power supply including a DC voltage source and switching elements for alternatively connecting an oscillating circuit, including the primary winding of a transformer, to the DC voltage source and to ground. In order to detect faults in a load on a secondary side of the transformer which would cause the resonant mode power supply to supply an inordinate amount of power, the power on the primary side is detected and if this primary power exceeds a predetermined threshold value, the frequency of oscillation is increased to reduce the power. If the fault condition persists, the switching of the switching elements is discontinued.

### DESCRIPTION OF THE INVENTION

It is an objective of the invention to delay tripping a resonant power converter during a transient overcurrent condition. This objective is achieved by a resonant power converter and by an overcurrent protection method for a resonant power converter according to the independent claims. Preferred embodiments are evident from the dependent patent claims.

According to the invention, the resonant power converter is provided with a damping resistor to be connected in parallel to a capacitor of a resonant circuit of the resonant power converter in case of a contingency condition. The damping resistor results in a damping of the resonant circuit and in a reduction of peak and turn-off currents in the power semiconductor switches of the resonant power converter at loads exceeding a rated load of the resonant power converter and occurring in case of a contingency condition, specifically during a transient overcurrent condition. The resonant power converter therefore may continue operating under contingency conditions. Tripping or otherwise proactively inactivating the resonant power converter may be avoided or at least delayed until normal converter operation is resumed as a result of a contingency condition root cause elimination, specifically as a result of an automatic fault clearance by some converter-external load protections means.

Specifically, a resonant power converter includes the following elements:
A first power conversion circuit including a first and second controlled power semiconductor switch connected in series between two converter input DC terminals and including, or defining, a first node between the first and second switch. The first power conversion circuit may be an inverter circuit with controlled semiconductor switches arranged in a half-bridge or full-bridge topology, or any other suitable circuit for generating a square-wave signal at a switching frequency.
A second power conversion circuit connected to converter output DC terminals. The second power conversion circuit may be a rectifier circuit having a plurality of diodes and/or controlled semiconductor switches for generating a rectified signal at the output DC terminals.

A resonant circuit, or tank circuit, coupled to the first and to the second power conversion circuit and including a winding of a converter transformer and a resonant capacitor. Specifically, the resonant circuit may include a primary, or converter input side, winding of the converter transformer and be connected to the first node of the first power conversion circuit as well as to one of the input DC terminals or to a second node of the first power conversion circuit. Alternatively, the resonant circuit may include a secondary, or converter output side, winding of the converter transformer and may be connected to a first node of the second power conversion circuit as well as to one of the output DC terminals or to a second node of the second power conversion circuit.

A damping circuit with a damping resistor element and a damping activator for disconnecting, or deactivating, the damping resistor during regular converter operation and for connecting, or activating, the damping resistor in parallel to the resonant capacitor upon detection of a contingency or overcurrent condition. The damping circuit may include further elements, specifically inductors or capacitors, to be suitably coupled across the resonant capacitor in case of a contingency.

In a preferred variant of the invention the resonant power converter is a LLC resonant converter for a high efficiency, load independent galvanic insulation of the DC output terminals from the DC input terminals, with the power semiconductor switches of the first and/or second power conversion circuit operating at a fixed, invariable switching frequency during regular converter operation. This LLC operation mode may include a constant DC voltage step-up or step-down conversion provided by a non-unity gain of the resonance circuit and/or a non-unity transformer ratio of the converter transformer. The fixed switching frequency is preferably within ten percent of a resonant frequency of the resonant circuit, with the ultimate choice of switching frequency depending on the type and voltage class of the power semiconductor elements. The LLC resonant topology allows for zero voltage switching of the power semiconductor switches thereby dramatically lowering switching or commutation losses, and specifically allowing a use of bipolar semiconductor switches in soft switching mode without associated snubber circuits.

Alternatively, the resonant power converter may perform, during regular converter operation, a continuous boost or buck regulation by modulation of the switching frequency in response to a load variation. In this case, upon detection of an overload condition, the protective effects achievable by switching frequency variation may be supported or even supplanted by the effects of the damping circuit.

In an advantageous embodiment of the invention the damping activator includes a controllable four quadrant switch that can block voltage and conduct current in both directions, such as a fast electro-mechanical switch or, preferably, an antiparallel connection of two paths comprising each a unidirectional controllable semiconductor switch and a diode blocking the respective reverse direction or more advanced structures such as reverse blocking or reverse conducting bipolar devices.

In advantageous variants of the invention the resonant circuit is devoid of, or excludes, a dedicated resonant inductor element in addition to the converter transformer that may otherwise be used for resonant circuit tuning in cases where the resonant capacitor is not available to this purpose. This provision is beneficial in terms of space and cost savings, and in turn does not preclude the presence of inductive elements in the damping circuit. Accordingly, the inductance Lr of the resonant circuit as measured with the transformer secondary shorted is essentially provided by a leakage inductance Llk and a magnetizing inductance Lm of the converter transformer. Preferably, a ratio Ln between the magnetizing inductance Lm and the leakage inductance Llk exceeds a value of 20, in particular a value of 50.

In a further embodiment of the invention the resonant power converter includes a control circuit effective to detect an overcurrent or overload condition associated with a failure at a load connected to the output terminals, and to send control signals to the damping activator indicative of a contingency condition and resulting in an adjustment of a switch state of a switch of the damping activator.

The invention is also directed to a Medium Voltage (MV) modular power converter for insulation and high efficiency DC voltage adaptation, including a plurality of modules or stages each comprising a resonant power converter. The converter input terminals and the converter output terminals of the resonant power converters are suitably connected in series and/or in parallel to provide for the target DC voltage adaptation.

Specifically, an overcurrent protection method for a resonant power converter according to the invention comprises the step of adjusting, upon detection of an overcurrent or overload condition that is associable with a failure at a load connected to the output terminals and that is not determined to require an unconditional and immediate shut-down of the resonant power converter, a switch state of a switch of the damping activator of the damping circuit. A changed switch state may include a permanent closing of the switch, or a repeated opening and closing of the switch during the contingency condition. The latter switch state may result from a pulse width modulation of the switch operation and implies that the damping resistor is only connected to the resonant capacitor for a fraction of the time, which in turn may help in reducing the power losses in the damping resistor.

A preferred variant of the overcurrent protection method includes the step of adapting, specifically, the step of lowering the switching frequency of the power semiconductor switches of the first and/or second power conversion circuit by a predetermined switching frequency modification or shift.

A further preferred variant of the overcurrent protection method includes the step of monitoring, or deriving, a thermal behaviour including a temperature of the power semiconductor switches of the first and/or second power conversion circuit of the resonant power converter, as well as the step of shutting down the resonant converter before a thermal safety limit is exceeded. Deriving a thermal behaviour may be based on measured currents or voltages in the resonant power converter, specifically the voltage across the resonant capacitor. If it is determined that in an ongoing overload situation, despite the fact that peak and turn-off currents in the power semiconductor switches are within a safe-operating range, a thermal behaviour of the switches is no longer acceptable the resonant power converter is shut down without further delay.

In an advantageous variant of the overcurrent protection method comprises, during an engineering phase prior to regular operation, a first preparatory step of determining an optimal value of a damping resistance of the damping resistor. The optimal resistance value minimizes a maximum current flowing through a power semiconductor switch of the first power conversion circuit for a specified overcurrent condition defined by an load current exceeding a rated full-load current by up to a factor of ten. The first preparatory step is followed by a second or subsequent preparatory step of determining a modification or shift in switching frequency of the power semiconductor switches of the first power conversion circuit that reduces, or limits, a turn-off current at the power semiconductor switches to a value below a rated maximum turn-off current, while maintaining the maximum current flowing through the power semiconductor switch below a rated peak current of the power semiconductor switch.

### BRIEF DESCRIPTION OF THE DRAWINGS

The subject matter of the invention will be explained in more detail in the following text with reference to preferred exemplary embodiments which are illustrated in the attached drawings, in which:
Fig.1 depicts a half-bridge LLC resonant power converter with damping circuit;
Fig.2 depicts a full-bridge LLC resonant power converter with damping circuit;
Fig.3 shows resonant tank current waveforms for different resistance values;
Fig.4 shows resonant tank current waveforms for different switching frequencies; and
Fig.5 schematically shows a diagram of a half-bridge LLC resonant power converter with different configurations of the damping circuit.

The reference symbols used in the drawings, and their primary meanings, are listed in summary form in the list of designations. In principle, identical parts are provided with the same reference symbols in the figures.

### DETAILED DESCRIPTION OF PREFERRED EMBODIMENTS

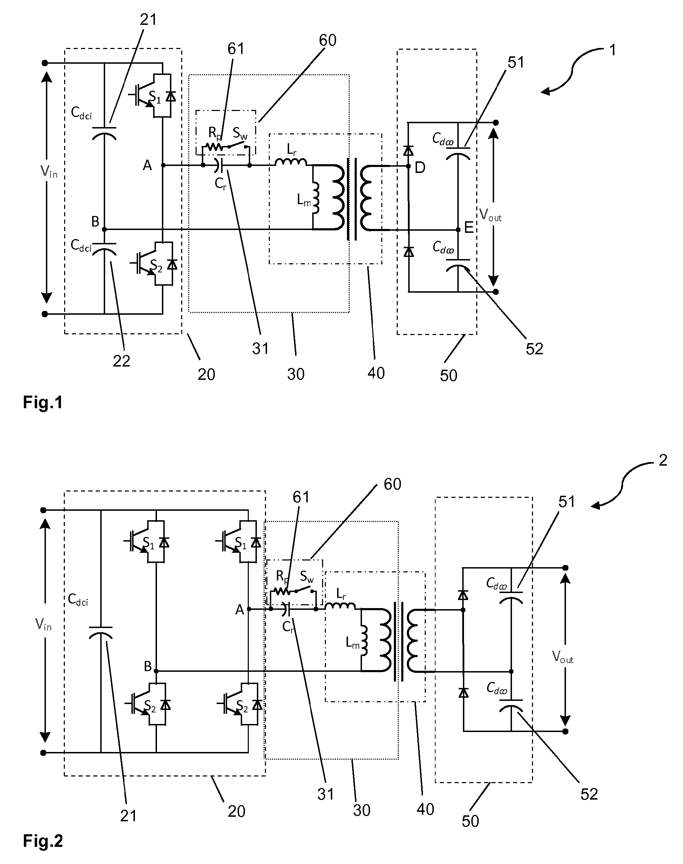

Fig.1 shows a schematic diagram of a LLC resonant power converter 1 including a damping circuit 60. Across two converter input dc terminals, an input dc-voltage, Vin, is applied at a primary side of the LLC resonant power converter 1. Accordingly, at a secondary side of the LLC resonant power converter 1, an output dc-voltage, Vout, is provided across two converter output dc terminals. The primary side of the LLC resonant power converter 1 comprises a first power conversion circuit 20 with a first controlled power semiconductor switch S1 and a second controlled power semiconductor switch S2 as well as a first capacitor 21 with capacitance Cdci and a second capacitor 22 with capacitance Cdci, the aforementioned components of the first power conversion circuit 20 being arranged in a half-bridge topology. In particular, pursuant to the half-bridge topology, the first switch S 1 and the second switch S2 are connected in series between the two converter input dc terminals and a first node A is defined between the first switch S1 and the second switch S2. Arranged in parallel to the first switch S 1 and the second switch S2, the first capacitor 21 and the second capacitor 22 are connected in series between the two converter dc input terminals. A second node or junction point, B, of the first power conversion circuit 20 is defined between the first and second capacitor. The two switches S 1 and S2 serve to generate a square-wave signal at a switching frequency. The first and second node, A and B, provide two junction points for connecting a LLC resonant circuit 30, the LLC resonant tank 30 comprising a resonant capacitor 31 with capacitance Cr and a primary winding of a converter transformer 40, which may be a Medium Frequency Transformer (MFT). A secondary winding of the converter transformer 40 is part of the secondary side of the resonant power converter 1. The primary winding of the converter transformer 40 provides a magnetizing inductance Lm. Additionally, the resonant tank 30 may include further dedicated resonant inductor elements with respective inductance Ld. However, even in absence of such dedicated inductor elements, the resonant tank 30 exhibits a leakage inductance Llk. Accordingly, the inductance Lr of the resonant tank 30, which is measured with shortened secondary winding of the converter transformer 40, is given by the leakage inductance Llk, the magnetizing inductance Lm and, eventually, the inductance Ld of potential dedicated inductor elements in the resonant tank 30.

The secondary windings of the converter transformer 40 connect to two nodes, D and E, contained in a second power conversion circuit 50, which is arranged on the secondary side of the resonant power converter 1. Said second power conversion circuit 50 includes two diodes connected in series with the two converter output dc terminals. The node D is defined between the first and the second diode. In parallel to the two diodes, a first capacitor 51 on the secondary side and a second capacitor 52 on the secondary side of the resonant power converter 1 are connected in series with the two converter output dc terminals. Between the first capacitor 51 and the second capacitor 52, the node E is arranged.

The primary side of the resonant power converter 1 further comprises a damping circuit 60, which includes a damping resistor element 61 with resistance value Rp and a damping activator in form of a switch Sw. During regular converter operation, the position of the switch Sw is such, that the damping resistor element 61 is disconnected from the resonant tank 30. However, upon detection of an overload condition, the switch Sw is activated such, that the damping resistor element 61 is connected in parallel to the resonant capacitor 31.

Fig.2 schematically shows a resonant converter 2 with a resistive damping circuit similar to Fig.1. Apart from the specific structure of the first power conversion circuit 21, whose components are arranged in full-bridge topology, the structure and the components in the schematic resonant converter of Fig.2 are identical to those shown in Fig.1 and described above. The power conversion circuit 20 shown in Fig.2 comprises two parallel branches each with a first and a second controlled power semiconductor switch S1 and S2. A capacitor 21 with capacitance Cdci is arranged in parallel to the two branches. In the first branch, the first switch S 1 and the second switch S2 are connected in series between the converter input dc terminals and a first node A is defined between these two switches. The first switch S 1 and the second switch S2 in the second branch are connected in series to the converter input dc terminals and a second node B is defined between the two switches in the second branch. Similarly to the case of the half-bridge topology, the pairs of switches S1, S2 can be controlled for generating a square-wave signal at a switching frequency. A resonant tank 30 of the resonant converter 2 is connected to the first node, A, and the second node, B, and the further components and their arrangement in the resonant converter 2 are the same as described in connection with Fig.1.

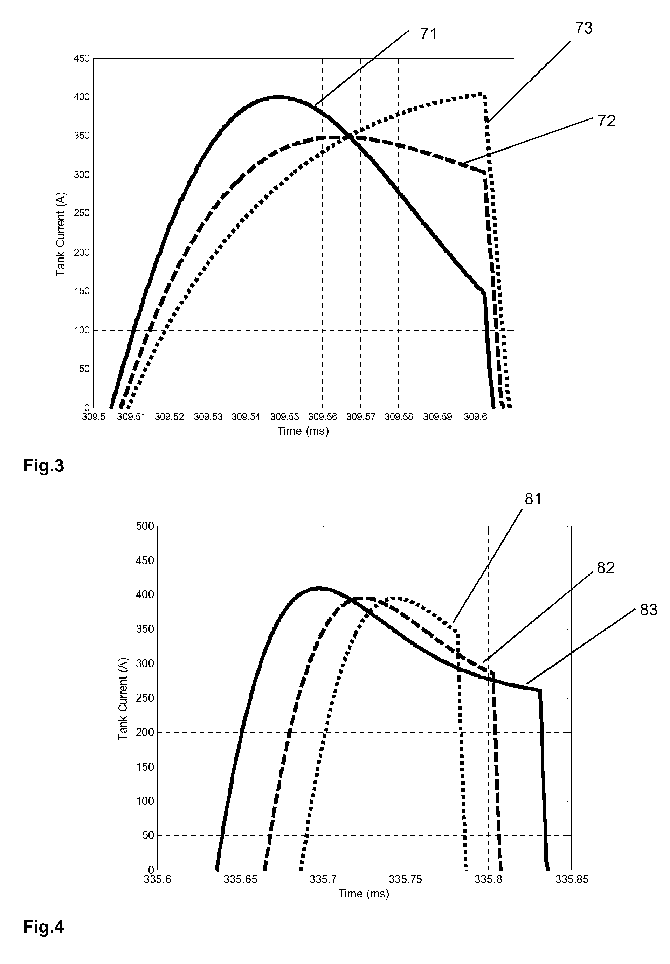

To exemplify the effect of the damping resistor circuit in the converter during a specified overload condition, Fig.3 shows a simulation of the resonant tank current waveforms in a resonant power converter with damping resistor, according to Fig.1 or Fig.2, as a function of time for three different resistance values Rp of the damping resistor at a transient overload condition, defined by three times the full-load condition. For the simulation it is assumed that the root mean square of the current in the converter is 200 A for regular converter operation, and, according to overload condition, the activator is activated such, that the damping resistor is connected in parallel to the resonant capacitor in the resonant tank. The tank current waveforms shown in Fig.3 refer to the case of a resonant converter operated at fixed switching frequency, which is determined by controlling the switches in the first power conversion circuit of the converter. Without the presence of the resistive damping element with resistance value Rp, the assumed specific overload condition would increase the current in the converter to three times its rated maximum. As a consequence, the safe operating area of the semiconductor switches in the first power conversion circuit could be trespassed and/or overheating of these components could result, leading to their failure. The resistance of the damping resistor can be described as a fraction of the resonant converter impedance ZCr, wherein the latter impedance is a function of the switching frequency. Accordingly, the first curve 71 reflects the tank current time dependence at the above specific overload condition in case of a damping resistor element with value Rp chosen to be equal to the impedance ZCr of the resonant capacitor at the given fixed switching frequency. Similarly, in case of the second curve 72, the resistance Rp of the resistive damping element is given by 0.5 ZCr, and the third curve 73 depicts the tank current waveform for a resistive damping element with 0.25 ZCr. Comparing the behaviour of the first curve 71 with the second curve 72, it can be seen that the peak current is suppressed in the latter case. However the turn off current gets increased in case of the second curve 72 as compared to the first curve 71. This is because the switching frequency is kept fixed in the simulations shown in Fig.3, while the resonance frequency of the resonant tank changes in dependence of the resistance value Rp of the damping resistor connected in parallel to the resonant capacitor during the specific overload condition. In particular, the resonance frequency is shifted towards lower frequencies the smaller the resistance value Rp is chosen. The larger difference between the chosen fixed switching frequency and the resonance frequency of the resonant circuit in the case represented by the second curve 72 as compared to the case of the first curve 71 therefore leads to a larger turn-off current associated with larger turn-off losses. Going to even smaller values of the resistance value, the latter effect of an enlarged turn-off current is further enhanced, as can be seen from the third curve 73, which refers to the case of a resistance value of 0.25 ZCr. In case of the third curve 73, the resonance frequency of the tank has shifted in such a significant way towards lower frequencies, that the turn-off current even exceeds the peak current of the first curve 71.

Simulations according to Fig.3 can be used in order to determine an optimal resistance value Rp of the damping resistor element in the damping circuit in terms of the impedance ZCr of the resonant capacitor. Given a specific overload condition, the optimal resistance value should minimize a maximum current flow through the power semiconductors of the first power conversion circuit. Among the first, second and third curves 71, 72 and 73, the second curve 72 reflects an optimal behaviour of the tank current, hence referring to an optimal resistance value of Rp given by 0.5 ZCr.

From Fig.3 it could be seen that the larger the difference between the switching frequency and the resonance frequency of the tank, the larger the turn-off current. Hence, in a second step, after determination of an optimal resistance value Rp, further optimization of the resonant converter with damping circuit could be obtained by adapting, or lowering, the switching frequency at overload condition as compared to a fixed switching frequency fsw during regular converter operation. Accordingly, Fig.4 shows a simulation of the resonant tank current waveforms as a function of time for three different values of the switching frequency during a contingency condition with an assumed overload converter current of four times a rated maximum converter current while maintaining a fixed damping resistor value Rp, chosen to be equal to the optimal value 0.5 ZCr discussed in connection with Fig.3. Starting from the fixed switching frequency fsw under regular operation conditions, which switching frequency in particular underlies the analysis of Fig.3, the switching frequency is lowered for the case of an assumed overload condition that is increased compared to Fig.3 to a prospective fault current equal to four times the rated or nominal maximum converter current. The first curve 81 in Fig.4 refers to the nominal switching frequency fsw, while the second curve 82 and the third curve 83 correspond to a reduction in the switching frequency fsw by a factor of 0.7 and 0.5, respectively. It can be seen that lowering the switching frequency at overload leads to an increase of the peak current in the resonant tank, while decreasing the turn-off current.

During a specific overload condition, the turn-off current in the resonant tank as well as the peak current have to be limited, in order to allow the semiconductor switches in the first power conversion circuit to operate in their safe operating area. Further, a smaller turn-off current decreases the switching losses in the semiconductor switches. Consequently, by lowering the switching frequency, there is an optimal value with desired low turn-off current, while maintaining the maximum current flowing through the semiconductor switches below a rated peak overcurrent value. Such optimal, reduced switching frequency can be determined during an engineering phase of the resonant power converter with resistive damping circuit. Referring to Fig.4, the curve 82 fulfils the bounds.

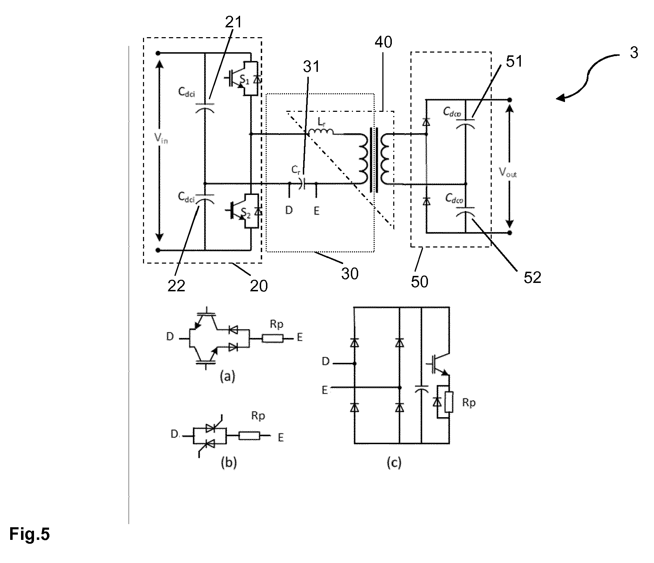

Fig.5 shows a schematic diagram of a half-bridge resonant power converter, similar to Fig.1, with two nodes, E and F, for connecting a damping circuit across the resonant capacitor 31. In the subfigures (a), (b) and (c) several variations of the damping circuit, referring in particular to the structure of the activator, or switch, in the damping circuit, are shown.

Specifically, subfigure (a) shows a controllable four quadrant switch built from an antiparallel connection of two paths. Each of the two paths comprises a unidirectional controllable semiconductor switch and a diode, in series with the unidirectional switch and blocking the respective reverse direction. The damping circuit further comprises a damping device connected in series with the controllable four quadrant switch between the two nodes E and F of the resonant power converter. The unidirectional switch and reverse diode functionality of any path may be integrated into one semiconductor device, eventually the elements of both paths may be integrated in to one single device.

A second variant of the damping circuit connectable between nodes E and F is shown in subfigure (b). An antiparallel connection of two controllable thyristors is provided in series with a damping device.

Finally, a third variant of the damping circuit for connection in series between the nodes E and F is depicted in subfigure (c). The damping circuit comprises two parallel branches, each branch with a first and a second diode connected in series. Between the first and the second diode in the first branch a first terminal is defined for connecting to the node D. In the second branch, a second terminal for connecting to the node E is defined between the first diode and the second diode. Further, in parallel to the two branches, a capacitor is arranged which will incidentally influence the resonant frequency during normal operation. Finally, in parallel to the capacitor, a series circuit comprising a unidirectional switch and a damping device is given. In the latter series circuit, an additional diode is arranged in parallel to the damping device and placed with forward direction opposite to the forward direction of the unidirectional switch.

Referring to the schematic diagrams in Fig.1, Fig.2 and Fig.5, the resonant capacitor 31 may be provided in the lower leg of the resonant circuit as shown in Fig.5, or in the upper leg of the resonant circuit as in Fig.1 and Fig.2. Alternatively, two or more resonant capacitors may be provided in the upper or the lower leg of the resonant circuit. In the latter case, one or more of the capacitors may have a damping circuit 60. The damping circuit may, in particular, be given by one of the variants (a), (b) or (c) shown in Fig.5, respectively.

The controllable power semiconductor switches of the aforementioned embodiments may include solid-state Silicon (Si), Silicon Carbide (SiC), or Gallium Nitride (GaN) based semiconductor switches of any type, such as insulated-gate bipolar transistors (IGBTs), integrated gate-commutated thyristors (IGCTs), metal oxide semiconductor field-effect transistors (MOSFETs), gate turn-off thyristors (GTOs), bipolar junction transistors (BJTs), and emitter turn-off thyristors (ETO).

While in the above configurations the converter input terminals may be coupled to a DC source and the converter output terminals may be coupled to a DC load, reverse power flow from output to input terminals may be equally possible.

The patent US 6087782 discloses ways of detecting overload situations. One method for the detection of an overload situation caused by a short circuit on the secondary side and described in the patent is based on measurement of the current in the resonant circuit on the primary side. The information on the measured current is provided to two comparators of an overcurrent protection circuit. A threshold voltage is applied to the second input of the comparators, respectively, and the comparator output signals are sent to a logic circuit. The threshold voltage on the second inputs of the comparators is adapted to the worst condition currents that semiconductor switching devices on the primary side can withstand. By means of the comparators, an overcurrent condition can be detected and the logic circuit can prompt further steps for protection of the components of the converter.

While the invention has been described in detail in the drawings and foregoing description, such description is to be considered illustrative or exemplary and not restrictive. Variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. The mere fact that certain elements or steps are recited in distinct claims does not indicate that a combination of these elements or steps cannot be used to advantage, specifically, in addition to the actual claim dependency, any further meaningful claim combination shall be considered disclosed.

### LIST OF DESIGNATIONS

- 1,2,3: resonant LLC power converter
- 20: first power conversion circuit
- 21,22: capacitors
- 30: resonant circuit
- 31: resonant capacitor
- 40: converter transformer
- 50: second power conversion circuit
- 51,52: capacitors
- 60: resistive damping circuit
- 61: resistive damping element
- 71,72,73: resonant circuit current waveforms
- 81,82,83: resonant circuit current waveforms

## Claims

1. A resonant power converter with
- a first power conversion circuit (20) connected to converter input terminals and including a first and second power semiconductor switch (S1, S2) and a first node (A) between the first and second switch;
- a second power conversion circuit (50) connected to converter output terminals;
- a resonant circuit (30) coupled to the first power conversion circuit (20) and to the second power conversion circuit (50) and including a winding of a converter transformer (40) and a resonant capacitor (31);
**characterized in that** the resonant power converter includes a damping circuit (60) with a damping resistor (61) and a damping activator (Sw) adapted to disconnect the damping resistor during regular converter operation and adapted to connect the damping resistor in parallel to the resonant capacitor upon detection of a contingency condition.

2. The resonant power converter as claimed in claim 1, **characterized in that** the resonant power converter is a LLC resonant converter (1,2,3) with the power semiconductor switches of the first power conversion circuit (20) operating at a fixed switching frequency during regular converter operation.

3. The resonant power converter as claimed in claim 1, **characterized in that** the damping activator (Sw) includes a controllable four-quadrant switch that can block voltage and conduct current in both directions.

4. The resonant power converter as claimed in claim 1, **characterized in that** the resonant circuit is devoid of a dedicated resonant inductor in addition to the converter transformer (40).

5. The resonant power converter as claimed in claim 4, **characterized in that** a ratio Ln between the magnetizing inductance Lm and the leakage inductance Llk exceeds a value of 20, in particular a value of 50.

6. The resonant power converter of any previous claim, comprising a control circuit effective to detect an overcurrent condition and to send control signals to the damping activator.

7. A modular power converter for DC voltage adaptation, including a plurality of modules each comprising a resonant power converter as claimed in any of the previous claims.

8. An overcurrent protection method for a resonant power converter as claimed in any of the claims 1 to 6, comprising
- adjusting, upon detection of an overcurrent condition a switch state of a switch of the damping activator.

9. The overcurrent protection method as claimed in claim 8, further comprising
- adapting the switching frequency of the power semiconductor switches (S1, S2) of the first power conversion circuit (20) by a predetermined switching frequency modification.

10. The overcurrent protection method as claimed in claim 8, further comprising
- monitoring a thermal behaviour of the power semiconductor switches (S1, S2) of the second power conversion circuit of the resonant power converter, and
- shutting down the resonant converter before a thermal limit is exceeded.

11. The overcurrent protection method as claimed in claim 8, comprising
- determining a value of a damping resistance Rp of the damping resistor (61) that minimizes a maximum current flowing through a power semiconductor switch of the first power conversion circuit (20) for an overcurrent condition defined by a load current exceeding a rated full-load current, and
- determining a modification in switching frequency of the power semiconductor switches of the first power conversion circuit that reduces a turn-off current at the power semiconductor switches, for the defined overcurrent condition, to a value below a rated turn-off current.
